(19) Europäisches Patentamt
European Patent Office
Office européen des brevets

(11) **EP 3 440 521 B1**

(12) **FASCICULE DE BREVET EUROPEEN**

(45) Date de publication et mention
de la délivrance du brevet:
**08.09.2021 Bulletin 2021/36**

(21) Numéro de dépôt: **17717652.6**

(22) Date de dépôt: **07.04.2017**

(51) Int Cl.:
**G05B 19/416** *(2006.01)*

(86) Numéro de dépôt international:
**PCT/EP2017/058437**

(87) Numéro de publication internationale:
**WO 2017/174800 (12.10.2017 Gazette 2017/41)**

(54) **METHODE, PROGRAMME ET DISPOSITIF D'OPTIMISATION DES PROGRAMMES D'USINAGE**

VERFAHREN, PROGRAM UND GERÄT ZUR OPTIMIERUNG VON
BEARBEITUNGSPROGRAMMEN

METHOD, PROGRAM AND DEVICE FOR OPTIMIZATION OF MACHINING PROGRAMS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.04.2016 EP 16164165
16.08.2016 EP 16184342**

(43) Date de publication de la demande:
**13.02.2019 Bulletin 2019/07**

(73) Titulaire: **Willemin-Macodel SA
2800 Delemont (CH)**

(72) Inventeur: **PRONGUE, Christophe
2882 St-Ursanne (CH)**

(74) Mandataire: **AWA Switzerland
Case Postale 2243
2800 Delémont 2 (CH)**

(56) Documents cités:
**EP-A1- 1 235 126       EP-A1- 2 336 839
EP-A1- 2 495 628       EP-A2- 0 917 033
US-A1- 2009 248 203    US-A1- 2014 025 194**

## Description

## Objet de l'invention

La présente invention concerne le domaine de l'usinage. Elle se rapporte à une méthode appliquée notamment au domaine de la CFAO (Conception et Fabrication Assistées par Ordinateur) dans le but d'optimiser les programmes d'usinage générés par ces logiciels.

## Arrière-plan technologique et état de la technique

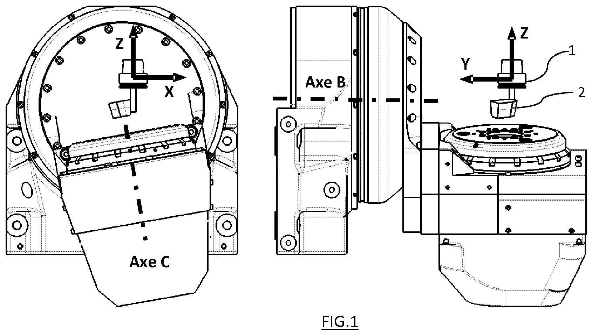

Le domaine de l'usinage "4 ou 5 axes" regroupe les différentes configurations cinématiques de machine-outil qui permettent d'orienter la pièce par rapport à l'outil selon respectivement 4 ou 5 degrés de liberté. Les machines 4 ou 5 axes permettent ainsi d'usiner par interpolation des surfaces complexes, réglées ou gauches. La chaine cinématique est généralement formée de 3 axes linéaires et d'1 ou 2 axes rotatifs pour une machine respectivement 4 ou 5 axes. Un exemple de configuration cinématique 5 axes est représenté à la figure 1. L'outil 1 se déplace selon les trois axes linéaires X, Y et Z avec Z perpendiculaire au plan X-Y et la pièce 2 selon les deux axes rotatifs B et C respectivement axés sur Y et Z.

La trajectoire de l'outil est décrite par la combinaison de la position du centre outil (TCP) et de l'orientation des axes rotatifs de la machine. Ce sont ces informations qui composent le programme d'usinage et définissent le parcours de l'outil par rapport à la pièce. Il s'agit ici de programme en mode RTCP (Rotation Tool Center Point), c'est-à-dire que chaque ligne de programme (ou bloc de programme) est composée des coordonnées XYZ du parcours de la pointe d'outil dans le repère de la pièce et d'une ou deux coordonnées angulaires suivant que l'on travaille en quatre ou cinq axes.

Les programmes d'usinage sont générés à l'aide de logiciels CFAO qui permettent la mise en commun des éléments définissant l'application à traiter : géométrie de la pièce et de l'outil, configuration cinématique de machine et stratégie d'usinage. Il est notamment possible de générer puis visualiser le parcours de l'outil sur la pièce.

La vitesse en bout d'outil n'est pas un paramètre contraignant pour la génération du programme d'usinage par la CFAO. Elle est généralement fixée par les paramètres de coupe liant l'outil et la matière usinée et n'est donc soumise à aucune contrainte liée à la configuration cinématique de la machine sur laquelle est exécuté le programme. Ainsi, le maintien d'une vitesse d'avance constante en bout d'outil implique que la machine soit capable d'assurer en tout temps le positionnement pièce-outil et la vitesse imposés par le programme.

En pratique, cette dernière condition est loin d'être toujours respectée. Par exemple, lorsque d'importants changements d'orientation de l'outil sont programmés sur une faible portion du parcours de l'outil, le maintien de la vitesse d'avance en bout d'outil implique des performances dynamiques que la machine ne peut pas toujours fournir. La machine est dès lors forcée de réduire la vitesse d'avance en bout d'outil de manière à respecter le parcours et l'orientation imposés par le programme.

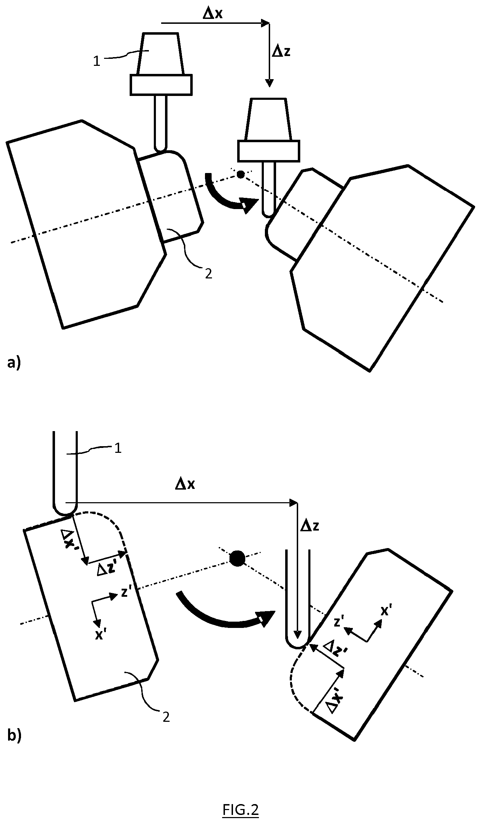

Ce phénomène est illustré aux figures 2a et 2b. On remarque que le contournement d'un petit rayon défini par les vecteurs Δx' et Δz' sur la pièce usinée engendre un déplacement beaucoup plus important au niveau des axes de la machine, soit Δx et Δz. Ces mouvements étant effectués dans le même temps, la vitesse des axes machine se trouve ainsi amplifiée par rapport à la vitesse programmée en bout d'outil.

La raison de cette amplification est purement géométrique. Le déplacement Δx et Δz des axes linéaires de la machine résulte en fait de la superposition de deux mouvements. Le premier mouvement est composé de la trajectoire du bout d'outil sur la pièce programmée par la CFAO et représentée en traitillé (Δx' et Δz'). Le second mouvement selon les axes X et Y découle de la rotation de la pièce nécessaire à maintenir l'orientation outil-pièce imposée par le programme. Ce second mouvement est communément appelé mouvement "suiveur". Plus la pièce est excentrée par rapport aux axes de rotation de la machine, plus l'amplitude de ce mouvement suiveur est importante. Cette observation s'applique également pour la configuration machine de type RTTTR composée d'une broche sur axe B et une table sur axe C ou A.

Un deuxième problème rencontré dans ce genre de configuration réside dans le fait que les systèmes CFAO ne permettent pas d'anticiper de manière maîtrisée les discontinuités de vitesse subies par les axes de la machine lorsqu'ils sont soumis aux transitions entre les zones usinées sans axe rotatif et celles usinées avec.

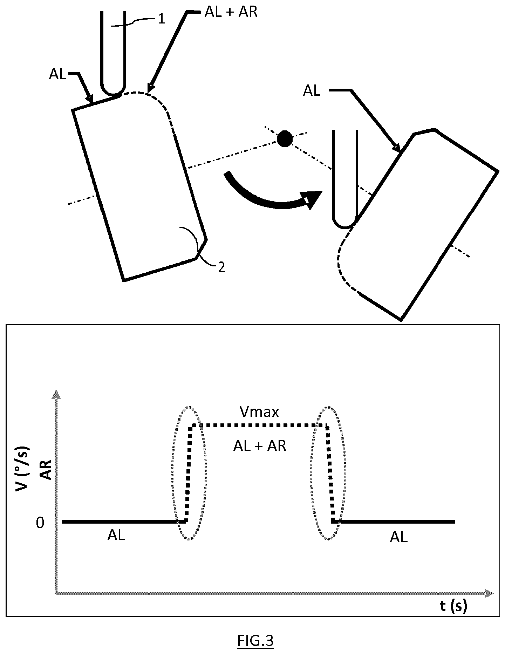

Partant de l'exemple précédent repris à la figure 3, on remarque que les deux zones du parcours outil situées en amont et en aval du rayon peuvent être usinées en deux axes linéaires (AL) sans intervention des axes rotatifs (AR). C'est de cette manière qu'elles sont traitées par la CFAO car celle-ci limite au maximum les axes impliqués dans chaque mouvement. Le profil de vitesse de l'axe B résultant de cette stratégie est représenté à la figure 3. Il comporte des discontinuités au début et à la fin du rayon (voir zones entourées). Elles sont certes compatibles avec la simulation du mouvement générée par la CFAO mais incompatibles avec les performances dynamiques des axes de la machine. En effet, un saut de vitesse se traduit par un saut d'accélération qui ne peut être respecté qu'à la condition que la force d'entraînement disponible pour chaque axe impliqué soit suffisante. Dans tous les cas, ces pics d'accélération auront comme conséquence de soumettre les structures de la machine à des efforts inertiels importants et donc incompatibles avec le niveau de précision requis pour les opérations de finition par exemple. Il s'ensuit la formation de marques indésirables sur la pièce.

Ce problème des discontinuités de vitesse des axes est directement influencé par la problématique exposée précédemment. En effet, plus la vitesse à atteindre par les axes rotatifs est élevée du fait de l'amplification découlant des mouvements suiveurs, plus le saut de vitesse nécessaire à assurer une vitesse d'avance constante en bout d'outil est élevé.

La solution qui consisterait à réduire la vitesse d'avance en bout d'outil dans le programme est rarement envisageable car elle n'empêche pas les discontinuités dans les profils de vitesse, s'éloigne des conditions de coupe optimales et réduit la productivité du procédé.

D'autres solutions proposées dans les documents EP 2 336 839, EP 1 235 126 et EP 0 917 033 consistent à lisser ou adoucir localement le profil de vitesse d'un ou plusieurs axes pris indépendamment. Ce sont des méthodes d'optimisation qui ont pour objet de modifier la trajectoire du bout de l'outil au passage d'une discontinuité géométrique. Cette démarche fait intervenir la notion de tolérance d'erreur entre la trajectoire nominale préalablement programmée et la trajectoire adoucie résultant de l'optimisation. L'erreur ainsi générée est reportée sur tous les axes pris en compte pour la reconstruction de la trajectoire adoucie. Ces solutions permettent certes de réduire les discontinuités liées aux axes mais ne prennent aucunement en compte la position relative des différents axes linéaires ou rotatifs de la machine par rapport à la pièce à usiner. En outre, des discontinuités sur les vitesses des axes rotatifs peuvent apparaître dans des zones où il n'y a pas de discontinuité géométrique. Par exemple, des discontinuités sur les vitesses des axes rotatifs peuvent apparaître à la jonction entre une portion plane et une portion courbe. Dans ce cas, les méthodes divulguées s'appuyant sur la détection d'une discontinuité géométrique n'apporteront pas de solutions. Pour finir, les documents précités divulguent des méthodes d'optimisation de la trajectoire programmée qui sont appliquées au niveau de la commande numérique, ce qui limite fortement la marge de manœuvre par rapport à une méthode d'optimisation appliquée en amont sur le programme d'usinage en tant que tel. Ces méthodes s'appliquant au niveau de la commande numérique permettent uniquement une optimisation très locale au niveau de la discontinuité.

**Buts de l'invention**

La présente invention vise à développer une méthode d'optimisation globale du parcours de l'outil qui s'applique en amont de la commande numérique, indépendamment de cette dernière sur laquelle est exécuté le programme d'usinage.

La présente invention a plus précisément pour objectif de fournir une méthode permettant d'optimiser les trajectoires d'approche des zones à forte variation de l'orientation outil-pièce, qu'elles soient avec ou sans discontinuités géométriques, afin de maintenir la vitesse en bout d'outil aussi constante que possible.

La présente invention vise en outre à développer une méthode d'optimisation qui s'appuie sur une modification de l'orientation de l'outil avec une trajectoire en bout d'outil qui, elle, n'est pas modifiée.

La présente invention vise ainsi in fine à améliorer la qualité des pièces usinées.

**Brève description des figures**

La présente invention sera mieux comprise à la lumière de la description qui suit, se référant, à titre d'exemple, aux figures 1 à 16.

La figure 1 représente, de manière connue, deux vues d'une machine d'usinage 5 axes avec les trois axes linéaires X, Y et Z de déplacement de l'outil et les deux axes rotatifs B et C de la pièce à usiner (type RRTTT).

Les figures 2a) et 2b) représentent le déplacement requis selon les axes X et Y pour assurer la trajectoire du bout d'outil sur la pièce avec compensation afin de maintenir le centre de l'outil dans la position désirée suite à la rotation de la pièce.

La figure 3 illustre à l'aide d'un graphique le saut de vitesse des axes rotatifs à la jonction entre une surface plane usinée uniquement avec des axes linéaires et une surface courbe usinée avec des axes linéaires et rotatifs.

La figure 4 représente un exemple de surface réglée susceptible d'être usinée partant du programme généré par la méthode selon l'invention.

La figure 5 représente la pièce de la figure 4 après adaptation de la géométrie pour les besoins de la programmation de l'usinage selon l'invention.

Les figures 6 et 7 représentent graphiquement la position et la vitesse des axes rotatifs respectifs en fonction du temps. De manière conventionnelle, les surfaces sont usinées en 3 axes pour les parties A de la pièce, et pour la partie B, en 5 axes.

La figure 8 représente les courbes utiles à la programmation de l'usinage de la pièce après adaptation de la géométrie selon l'invention.

La figure 9 illustre l'influence du désalignement des vecteurs d'orientation sur la position de l'outil dans les zones planes.

Les figures 10 et 11 illustrent graphiquement l'influence du désalignement des vecteurs d'orientation sur la position et la vitesse des axes rotatifs respectifs en fonction du temps.

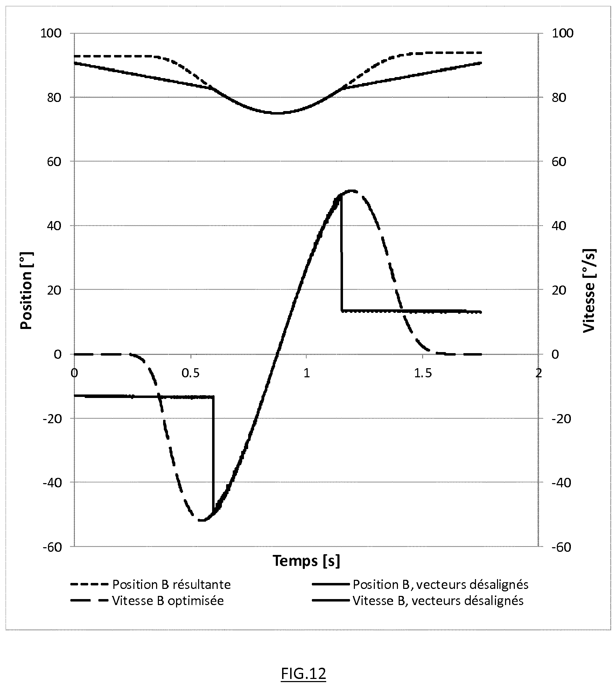

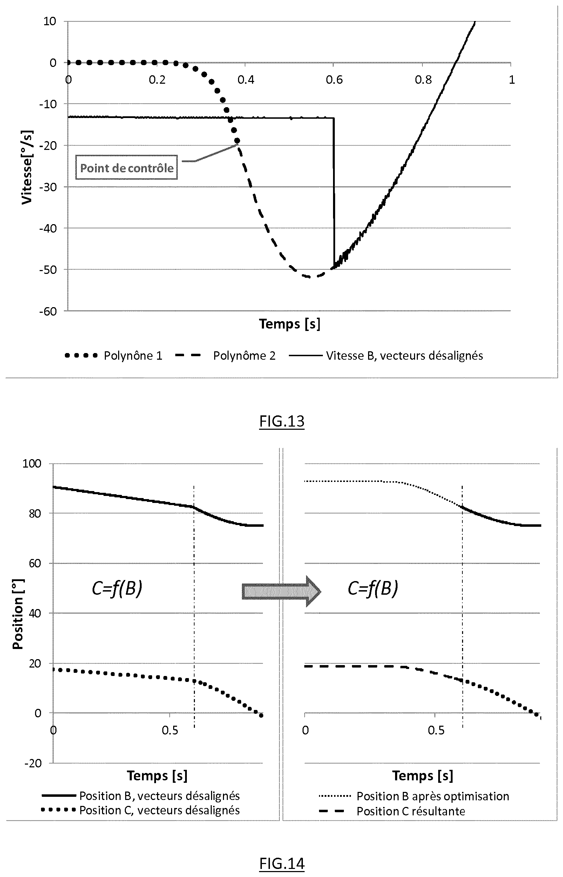

La figure 12 représente graphiquement la position et la vitesse d'un axe rotatif en fonction du temps avant et après optimisation selon l'invention. La figure 13 est un agrandissement d'une partie du graphique de la figure 12 où on peut visualiser le point de raccord entre les deux polynômes d'interpolation. La figure 14 représente à gauche la fonction qui lie cinématiquement la position de l'axe B à la position de l'axe C après désalignement des vecteurs d'orientation dans les zones planes. A droite, elle représente cette même fonction appliquée sur la position de l'axe B après optimisation pour déterminer la position résultante de l'axe C.

La figure 15 représente graphiquement la vitesse de l'axe rotatif B en fonction du temps avant et après optimisation selon l'invention et la vitesse de l'axe rotatif C qui en découle.

La figure 16 représente à l'aide d'un schéma bloc les étapes mises en œuvre dans la méthode de génération d'un programme d'usinage selon l'invention, suivies de l'étape d'exécution du programme généré au niveau de la commande numérique équipant la machine d'usinage.

Légende

(1)      Outil
(2)      Pièce
(3)      Surface réglée
(4)      Arête inférieure
(5)      Arête supérieure
(6)      Courbe auxiliaire fictive servant de courbe d'appui
(7)      Courbe guide
(8)      Vecteur d'orientation
A :      Zone usinée avec les axes linéaires
B :      Zone usinée avec les axes linéaires et au moins un axe rotatif
AL :      Axe linéaire
AR :      Axe rotatif

**Principaux éléments caractéristiques de l'invention**

La présente invention se rapporte à une méthode de génération d'un programme d'usinage définissant une trajectoire d'un outil par rapport à une pièce à usiner, ladite méthode incluant :

- la génération d'un code de base définissant la trajectoire de l'outil avec un premier parcours où le mouvement relatif s'effectue uniquement selon des axes linéaires suivi d'un second parcours où le mouvement relatif s'effectue selon des axes linéaires et un ou deux axes rotatifs,

caractérisée en ce qu'elle inclut en outre :

- l'optimisation du code de base pour modifier la trajectoire préalablement définie, à l'aide des étapes suivantes :
- modification du premier parcours avec un mouvement relatif s'effectuant selon les axes linéaires et le ou les axes rotatifs avant d'aborder le second parcours ; la modification du premier parcours s'effectuant en modifiant l'alignement et la répartition de vecteurs d'orientation de l'outil sur ledit premier parcours ;
- reconstruction du profil d'une grandeur cinématique dudit ou d'un desdits axes rotatifs sur le premier parcours afin de supprimer les discontinuités sur le profil.

Selon des modes particuliers de l'invention, la méthode comporte au moins une ou une combinaison appropriée des caractéristiques suivantes :

- la trajectoire de l'outil comporte une alternance de plusieurs premiers et seconds parcours ;
- l'étape de reconstruction du profil de la grandeur cinématique s'effectue par interpolation polynomiale ;
- l'étape de reconstruction du profil de la grandeur cinématique s'effectue uniquement sur le premier parcours ;
- en présence de deux axes rotatifs, l'axe rotatif choisi pour l'étape de reconstruction du profil de la grandeur cinématique est celui présentant la configuration cinématique la plus défavorable. On entend par configuration cinématique la plus défavorable, celle qui engendre les mouvements suiveurs les plus importants au sens expliqué précédemment ;
- en présence de deux axes rotatifs, la relation cinématique qui lie les deux axes rotatifs sur le premier parcours modifié est déterminée par interpolation numérique ;
- en présence de deux axes rotatifs, la relation cinématique qui lie les deux axes rotatifs sur le premier parcours modifié est déterminée de manière analytique ;
- après l'étape de reconstruction du profil de la grandeur cinématique d'un desdits axes rotatifs sur le premier parcours, ladite relation cinématique est utilisée pour reconstruire le profil d'une grandeur cinématique de l'autre desdits axes rotatifs ;
- la grandeur cinématique est la vitesse ;
- après l'étape de reconstruction du profil de la vitesse dudit ou d'un desdits axes rotatifs sur le premier parcours, son profil de position est recomposé par intégration du profil de vitesse reconstruit ;
- en présence de deux axes rotatifs, le profil de position de l'autre desdits axes rotatifs est calculé sur base de la relation cinématique liant les positions des deux axes rotatifs ;
- elle comprend une étape d'adaptation de la géométrie de base de la pièce à usiner avant l'étape d'optimisation du code de base ;
- l'étape d'adaptation consiste à prolonger les surfaces à usiner de ladite pièce, une courbe fictive servant d'appui à l'outil étant créée dans la partie prolongée de la pièce.

La présente invention se rapporte aussi au programme d'usinage définissant une trajectoire d'outil pour une pièce présentant une première portion pouvant être usinée avec seulement des axes linéaires suivie d'une seconde portion nécessitant un usinage avec des axes linéaires et un ou deux axes rotatifs, caractérisé en ce que la trajectoire d'outil comporte pour la première portion un parcours avec un usinage selon les axes linéaires et le ou les axes rotatifs et en ce que le profil de vitesse dudit ou d'un desdits axes rotatifs est continu entre la première portion et la seconde portion.

Elle se rapporte également au moyen d'enregistrement des données lisibles par un ordinateur comprenant le programme décrit ci-dessus.

## Description générale de l'invention

Les différents paramètres décrivant le parcours outil et leur influence spécifique ont été décrits précédemment. Certains d'entre eux comme la géométrie de la pièce et la cinématique de la machine sont fixés pour chaque application sur une machine donnée. Seules la stratégie d'usinage et, dans une moindre mesure, la géométrie de l'outil sont des paramètres ouverts qui permettent d'influer sur la qualité finale de la trajectoire outil-pièce.

Dès lors, la présente invention se rapporte à une méthode de génération d'un programme d'usinage visant à optimiser les trajectoires d'approche des zones à forte variation de l'orientation outil-pièce, de manière à anticiper les discontinuités dans les profils de vitesse et d'accélération. Cela permet ainsi de rendre les mouvements d'axes de la machine compatibles non seulement avec les performances desdits axes mais également de maintenir la vitesse en bout d'outil aussi constante et homogène que possible.

Cette méthode s'applique aux cas d'usinage en 4 et 5 axes pour tout type de surface et, plus particulièrement, pour des surfaces réglées ou gauches. Toutes les cinématiques de machine, sérielles ou parallèles, comprenant 3 axes linéaires et un ou plusieurs axes rotatifs sont susceptibles de bénéficier de la présente invention. Elle s'applique ainsi aussi bien aux configurations avec les 3 axes linéaires sur l'outil et le ou les axes rotatifs sur la pièce (RRTTT) qu'à d'autres configurations avec, par exemple, les axes linéaires conditionnant le déplacement de la pièce (RTTTR).

La méthode s'articule autour de deux étapes.

De manière à anticiper les discontinuités dans les profils de vitesse et d'accélération, une étape consiste à mettre en mouvement le ou les axes rotatifs avant la zone à forte variation de l'orientation outil-pièce. En d'autres mots, cette étape consiste à combiner des mouvements linéaires et rotatifs des axes dans des zones de la pièce où l'usinage pourrait se faire par interpolation des axes linéaires uniquement. Par exemple, cela s'effectue en modifiant dans le code de base du programme d'usinage, l'alignement et la répartition des vecteurs d'orientation de l'outil. Cette approche s'applique que la surface soit réglée ou gauche à la seule différence que, dans le cas d'une surface gauche, les vecteurs d'orientation ne sont pas nécessairement parallèles à la surface considérée. Cette approche permet d'améliorer le comportement global en bout d'outil. Cependant, comme décrit plus loin, cette étape permet de réduire l'amplitude de la discontinuité mais ne l'annule pas.

Dès lors, la méthode comprend une autre étape essentielle d'optimisation de la trajectoire d'outil en amont et en aval de la discontinuité, et plus précisément, en amont et en aval de la zone à forte variation de l'orientation outil-pièce. Dans cette étape, le profil de vitesse d'un des axes rotatifs ou du seul axe rotatif dans le cas d'un usinage 4 axes est recomposé en amont et en aval de ladite zone pour supprimer la discontinuité. L'optimisation peut s'effectuer sur le profil de vitesse ou sur d'autres grandeurs cinématiques, comme par exemple l'accélération. Le profil reconstruit résulte de la juxtaposition d'une ou plusieurs courbes polynomiales. Le choix de l'axe rotatif à optimiser se porte sur l'axe rotatif qui présente la configuration cinématique la plus défavorable. Ainsi, l'axe rotatif est choisi sur base de critères tels que son influence sur les mouvements suiveurs.

Dans le cas d'un usinage 5 axes, la méthode comporte en outre une étape de synchronisation entre les deux axes rotatifs sur base des relations cinématiques qui lient lesdits axes à la géométrie de la pièce et à son interaction avec l'outil. En d'autres mots, il s'agit d'une étape de reconstruction du profil d'une grandeur cinématique du second axe rotatif basé sur l'optimisation du premier axe rotatif et la relation cinématique qui lie ces deux axes.

La méthode peut optionnellement comporter d'autres étapes qui sont fonction de la géométrie à usiner et des contraintes imposées par la machine d'usinage. Ces étapes seront décrites ci-dessous dans un exemple illustrant l'usinage d'une surface réglée à l'aide d'une machine 5 axes.

On précisera que, dans les exemples illustrés, les discontinuités dans le profil de vitesse apparaissent plus particulièrement à la jonction entre une portion plane et une portion courbe. Cependant, des sauts de vitesse peuvent, en fonction de la pièce à usiner, apparaître en d'autres points. Il va de soi que la méthode garde toute sa pertinence dans ces cas de figure.

On précisera à nouveau que, de par la relation qui lie la position du TCP avec le temps, l'optimisation décrite ici couvre non seulement cette position mais également toutes les grandeurs qui découlent de sa dérivation (simple ou multiple) par rapport au temps. La méthode selon l'invention permet d'optimiser les variations de l'orientation de l'outil par rapport à la pièce tout en gardant la trajectoire nominale en bout d'outil préalablement définie dans le code de base.

Le programme fait autant référence au langage de programmation ISO qu'aux différents langages de programmation développés par les fabricants de machines-outils.

Les procédés d'enlèvement de matière en 4 ou 5 axes potentiellement concernés par cette méthode sont le fraisage, la découpe laser, le rabotage ou encore l'usinage avec assistance ultrasonique. Cette liste n'est pas exhaustive.

## Description détaillée de l'invention

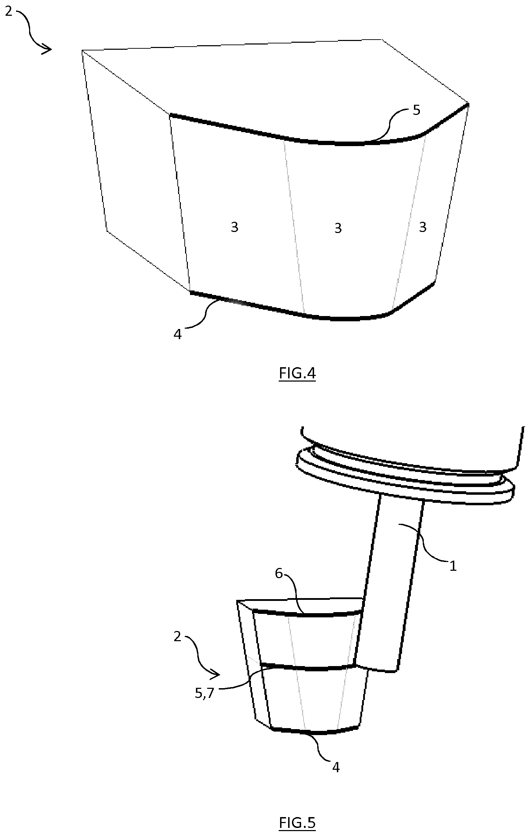

La méthode selon l'invention est illustrée ci-dessous pour l'usinage à l'aide d'une machine 5 axes d'une surface réglée telle que présentée à la figure 4. Certaines contraintes au niveau de l'usinage ont été à dessein ajoutées pour illustrer une étape optionnelle de préparation de la géométrie de la pièce à usiner.
La méthode comporte ainsi :

- une étape de préparation de la géométrie ;
- une étape d'adaptation du profil de vitesse des axes rotatifs qui consiste à mettre en mouvement le ou les axes rotatifs avant la zone à forte variation de l'orientation outil-pièce, c.à.d. dans la portion qui pourrait être uniquement usinée à l'aide des axes linéaires ;
- une étape d'optimisation du profil de vitesse d'un des axes rotatifs qui consiste entre autres à recomposer un profil de vitesse adéquat en amont et en aval de ladite zone de manière à ce que le profil en amont et le profil en aval soient continus.

### Etape optionnelle de préparation de la géométrie

Pour une pièce ou un contour donné sur une pièce, il peut être nécessaire de faire certaines adaptations préparatoires avant de les soumettre au logiciel CFAO. Cette préparation repose sur le principe que le bout d'outil (TCP) doit impérativement suivre la ligne géométrique la plus contraignante. Cette ligne peut être une arête ou une génératrice. Elle sera choisie en fonction des contraintes fonctionnelles, dimensionnelles et/ou esthétiques de la zone considérée. La justification de ce premier principe s'explique par le fait qu'en usinage 5 axes la trajectoire d'outil est décrite par la combinaison de la position du TCP (coordonnées X, Y et Z) et l'orientation des axes rotatifs. Ce sont ces informations qui composent le programme et qui fixent la position et l'orientation de l'outil par rapport à la pièce. De par la configuration géométrique d'une machine conventionnelle (3 axes linéaires en série plus 2 axes rotatifs en série), l'information qui est reproduite de la manière la plus fiable est la position du TCP dans le repère pièce. L'orientation des axes rotatifs est plus délicate à maîtriser, notamment en raison des décalages relatifs qui, s'ils sont mal définis, génèrent des erreurs de positionnement sur les mouvements suiveurs. L'exemple suivant illustre ce premier principe et montre comment le modèle doit être adapté pour qu'il reste exploitable par la CFAO. Sur la figure 4, la surface réglée 3 située entre l'arête inférieure 4 et l'arête supérieure 5 peut être usinée en 4 axes mais il a été choisi de traiter l'usinage en 5 axes qui est la solution la plus contraignante.
Différentes stratégies peuvent être mises en œuvre pour usiner cette surface. On peut notamment citer:

- L'usinage *"entre deux géométries"* qui consiste à choisir une arête comme lieu des points suivis par le bout d'outil (courbe guide) et la seconde arête comme courbe d'appui.
- L'usinage d'une *"surface"* qui prend en compte la surface elle-même pour calculer la position de l'outil.

La première stratégie qui est celle qui offre la plus grande flexibilité de mise en oeuvre a été choisie. En admettant maintenant que l'application étudiée impose les contraintes suivantes:

- la ligne géométrique prédominante est l'arête supérieure 5;
- la fixation de la pièce sur la machine ne permet pas de choisir l'arête inférieure 4 comme courbe d'appui ;

on se retrouve devant un problème qui ne peut être traité simplement par la CFAO.
Selon l'invention, il est proposé de contourner le problème en construisant une courbe auxiliaire fictive 6 qui servira de courbe d'appui pour l'outil 1. Celle-ci est obtenue par une extrusion de la pièce comme représenté à la figure 5 qui garantit le maintien de l'orientation de la surface à usiner. Il est important que la géométrie de base soit définie de la manière la plus épurée et fidèle possible. Cela évitera d'éventuelles discontinuités de trajectoire nuisibles à la fluidité du mouvement.
On observe sur la figure 5 qu'en l'état, il est encore nécessaire d'adapter la longueur d'outil de manière à ce que la face à usiner soit bien couverte par l'outil. Cette adaptation peut se faire sur la CFAO ou en adaptant les paramètres de l'outil dans la commande numérique.

### Etape d'adaptation des profils de vitesse des axes rotatifs

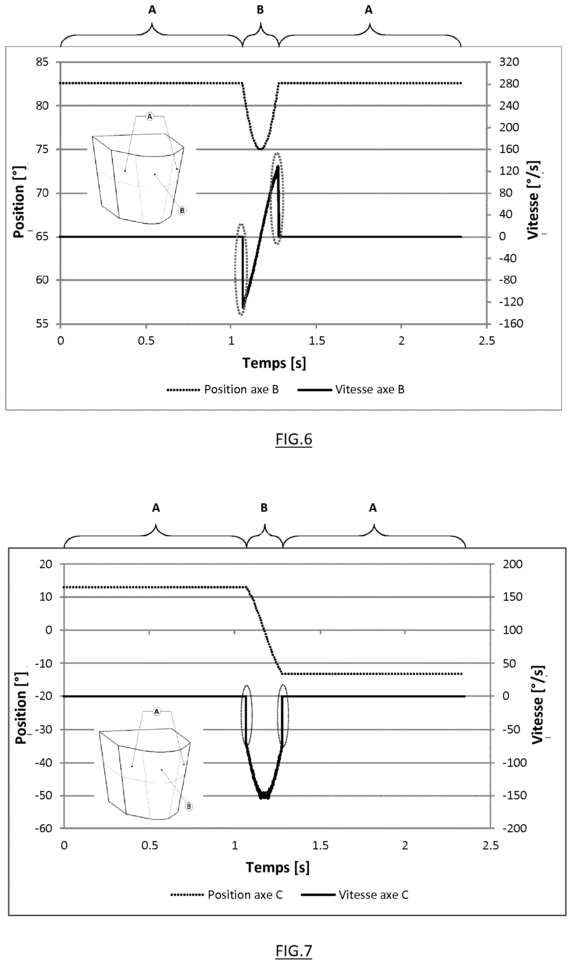

La pièce illustrée à la figure 4 contient une surface réglée 3 qui doit en partie être usinée en 5 axes. Cette surface contient une succession de portions planes A et courbes B représentées à la figure 6. L'approche communément utilisée dans ce genre de configuration est d'usiner les portions planes en 3 axes et les portions courbes en 5 axes. Cette manière de faire pose un problème au raccordement de ces différentes zones : comme déjà mentionné, la vitesse d'avance en bout d'outil ne peut pas être maintenue étant donné que les axes linéaires doivent ralentir pour rester synchronisés avec les axes rotatifs en phase d'accélération. Ainsi, durant cette phase, la structure de la machine est soumise à des forces inertielles importantes qui affectent la précision finale du positionnement pièce-outil et se traduisent par des marques sur les pièces. Les figures 6 et 7 illustrent les sauts de vitesse des axes rotatifs à l'origine de ces phénomènes (voir jonctions entourées).
Afin d'éviter les pics d'accélération aux jonctions de surface et aborder ainsi les zones d'usinage problématiques de manière plus douce, il est proposé de gérer l'accélération et la décélération des axes rotatifs avec des profils de vitesse maîtrisés le long des surfaces planes latérales. Plus précisément, il est proposé de forcer l'usinage en 5 axes pour les portions planes. Cette contrainte ne peut être appliquée que sous certaines conditions qui sont propres à chaque géométrie et énumérées ci-après à travers l'exemple.

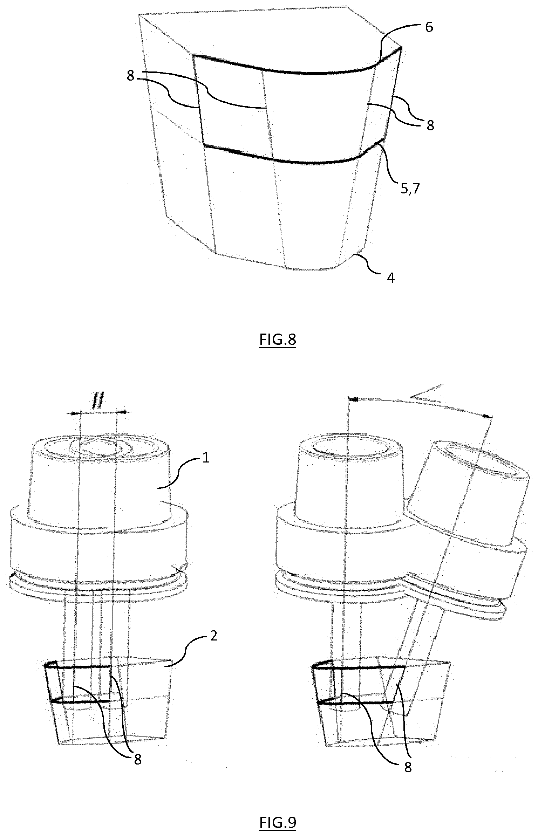

A la figure 8, les éléments géométriques de base qui servent à la programmation du parcours outil sont représentés. En plus de la courbe d'appui 6 et de la courbe guide 7, des vecteurs d'orientation 8 sont répartis le long du parcours d'outil et fixent à un point donné l'orientation de l'outil. On observe que les deux vecteurs 8 qui délimitent les surfaces planes sont parallèles, ce qui signifie que l'orientation de l'outil reste identique entre le début et la fin du parcours lié à ces surfaces. La trajectoire de l'outil reste donc définie avec les 3 axes linéaires. Par contre, lorsque le vecteur de départ prend une légère inclinaison tout en restant dans le plan de la surface, l'orientation de l'outil est différente entre le début et la fin de cette surface ce qui se traduit par un parcours d'outil combinant les axes linéaires et rotatifs. La figure 9 illustre cette différence. Cette approche permet ainsi de mettre en mouvement les axes rotatifs avant d'aborder la transition entre les différentes zones usinées. Cependant, un problème de taille subsiste : les systèmes de CFAO ne permettent pas de moduler cette vitesse en fonction de la position de l'outil entre les deux vecteurs d'orientation. Ainsi, la vitesse angulaire reste constante tout le long de cette portion, ce qui réduit l'amplitude de la discontinuité de vitesse mais ne l'annule pas.

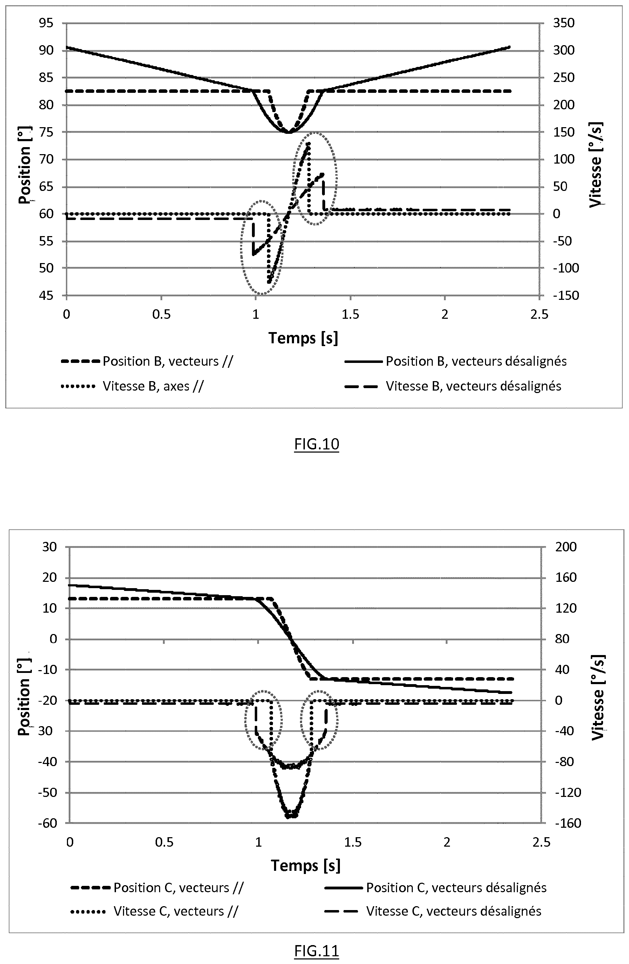

A ce stade, malgré les adaptations faites sur les entités géométriques, on s'aperçoit sur les figures 10 et 11 que les systèmes CFAO ne permettent pas d'éviter ces discontinuités dans le profil de vitesse. Cette approche permet néanmoins de donner une information très utile sur la relation cinématique qui lie la position de l'axe B et celle de l'axe C dans les deux portions latérales planes de la pièce. L'exploitation de cette information sera abordée dans l'étape suivante d'optimisation des profils de vitesse. Une autre approche consiste à déterminer de manière analytique la relation cinématique qui lie les axes rotatifs B et C. La géométrie de la pièce définie dans le fichier CAD associée à une géométrie d'outil donnée permet de définir, en chaque point de la trajectoire du centre d'outil, les combinaisons des axes rotatifs qui assurent une orientation pièce-outil correcte, le but étant d'assurer un enchaînement de ces combinaisons qui soit optimal en termes de continuité des profils de vitesse des axes rotatifs. Cette approche permet de connaître la relation B-C en tous points (XYZ) de la trajectoire d'outil sans passer par l'étape précitée de modification de l'alignement des vecteurs d'orientation de l'outil.

## Etape d'optimisation des profils de vitesse des axes rotatifs

L'ultime étape de la méthode selon l'invention consiste à optimiser les profils de vitesse des axes rotatifs obtenus à l'étape précédente de manière à ce qu'ils restent continus dans les zones de transition.

Dans un premier temps, il est nécessaire de choisir l'axe rotatif de référence. Ce choix se fait sur la base de la considération suivante : l'axe rotatif de référence est celui qui présente la configuration cinématique la plus défavorable. Ainsi, son optimisation sera la plus influente sur l'atténuation des forces d'inertie parasites qui détériorent la position relative pièce-outil durant l'usinage. Dans l'exemple traité, l'axe B est choisi comme axe de référence étant donné que la pièce peut rarement être positionnée au centre de cet axe. Les décalages, parfois importants, sont à l'origine de mouvements suiveurs dont la dynamique affecte la précision de position relative pièce-outil. Cette règle n'est pas absolue et peut varier de cas en cas.

Ensuite, le profil de vitesse de l'axe B est optimisé. L'optimisation du profil de vitesse repose sur la nécessité d'éviter les sauts ou discontinuités. L'idée est de recomposer un profil de vitesse adéquat en amont et en aval des zones de transition. Le choix de travailler sur ces zones amont/aval et non sur la zone centrale s'explique par le fait que, dans la zone centrale, la relation cinématique qui lie les positions B et C est bijective. En d'autres mots, pour un point de la courbe guide situé sur la surface courbe, une seule combinaison BC permet de déterminer l'orientation de l'outil. Plusieurs combinaisons BC sont par contre possibles pour un point situé sur les faces planes latérales. C'est cette flexibilité qui permet de recomposer un profil de vitesse plus adéquat tout en respectant les contraintes géométriques de la pièce. La figure 12 illustre cette démarche. Le profil de vitesse découlant de la CFAO est représenté en trait continu et en traitillé est représenté un profil composé de manière à éviter les discontinuités. Un tel profil résulte de la juxtaposition d'une ou plusieurs courbes polynomiales discrétisées de la forme :

$$\frac{B_i - B_{i-1}}{t_i - t_{i-1}} = \sum_{j=0}^{n} a_j \cdot t_i^j$$

Les données générées par la CFAO sont définies de manière discrète par les "blocs" qui composent le programme. La base de temps est obtenue par division de la longueur de chaque segment (défini par 2 blocs consécutifs) composant la courbe guide par la vitesse d'avance du TCP. Ces polynômes sont ainsi calculés par interpolation polynomiale. Un point de contrôle ainsi que le choix du degré n de chaque polynôme permettent d'assurer une continuité optimale du profil de vitesse entre les deux courbes ainsi qu'au raccordement avec le profil originel (figure 13). La même démarche s'applique à la face plane en sortie de la partie courbe.

Une fois le profil de vitesse optimisé, le profil de position de l'axe B est reconstruit en intégrant numériquement les valeurs de vitesse de manière rétrograde en partant du point de transition. Un exemple de reconstruction est présenté à la figure 12.

Ensuite, la position correspondante de l'axe C est calculée. La reconstruction de la position de l'axe C est contrainte par la relation cinématique qui la lie avec la position de l'axe B. Pour rappel, même s'il existe plusieurs combinaisons BC possibles pour un point donné sur la face plane, chacune de ces combinaisons est contrainte par l'orientation de cette même face. L'avantage ici est que, grâce à l'adaptation des éléments géométriques de base décrite précédemment, il est possible de déterminer la relation qui lie les positions relatives des axes rotatifs afin que la face reste plane.

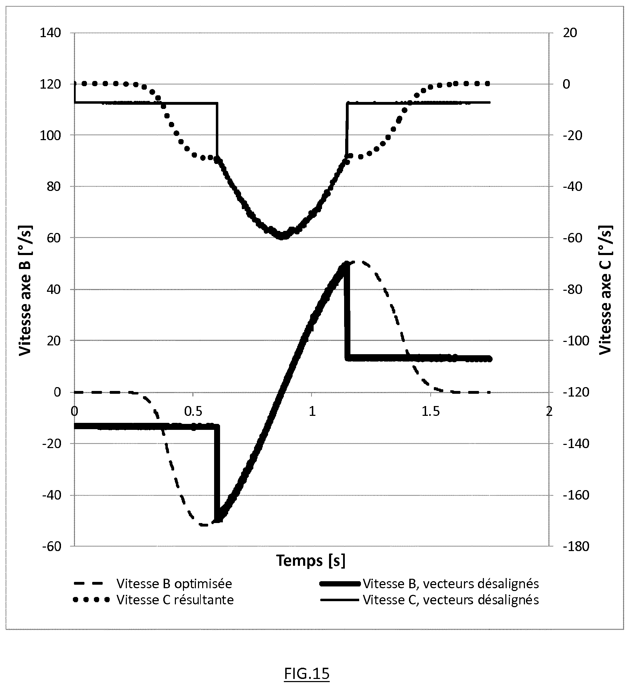

Partant des valeurs du programme calculé en configuration "vecteurs d'orientation désalignés", on remarque que pour chacune des faces planes latérales, il est possible de définir, par interpolation numérique, une relation du type C=f(B) (figure 14). Pour mieux comprendre cette relation, on peut la définir comme étant la condition qui garantit que l'axe de l'outil soit toujours parallèle au plan latéral considéré. Comme la géométrie n'est pas impactée par l'optimisation de l'axe B, on peut appliquer la même fonction au profil de position optimisé de l'axe B pour obtenir la position d'axe C correspondante. Les profils de vitesse correspondants sont illustrés à la figure 15.

Comme déjà mentionné, on peut s'affranchir de la détermination de la relation cinématique B-C par interpolation numérique en déterminant directement ladite relation de manière analytique.

On observe à la figure 15 que le fait d'avoir optimisé un des axes rotatifs n'assure pas forcément que le second axe soit parfaitement optimisé. C'est pourquoi il est nécessaire de choisir un axe rotatif préférentiel tel qu'expliqué précédemment. On remarque sur la figure 15 que le profil de vitesse de l'axe C résultant n'est plus discontinu mais il comporte encore de fortes variations de pente aux points de transition.

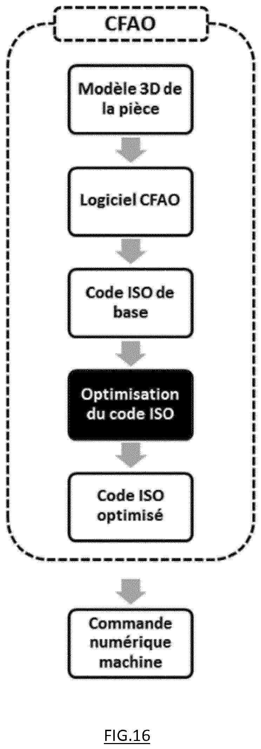

En résumé, la figure 16 illustre à l'aide d'un schéma bloc la méthode d'optimisation réalisée au niveau de la CFAO suivi de l'exécution sur la commande numérique du programme d'usinage optimisé.

## Avantages de l'invention

Contrairement au code ISO actuel qui génère des parcours d'outils basés principalement sur le respect dimensionnel de la géométrie de la pièce à usiner, le programme d'usinage modifié selon la méthode de la présente invention prend également en compte les performances réelles de la machine chargée d'assurer un positionnement relatif correct entre la pièce et l'outil.

La méthode est entièrement indépendante de la commande numérique sur laquelle est exécuté le programme. Cela permet d'introduire des modifications sur la trajectoire préalablement définie plus importante et plus globale prenant en compte les relations cinématiques qui lient les axes. Cela permet ainsi d'adapter la méthode à la cinématique de la machine étudiée indépendamment de la CN dont elle est équipée. Ainsi, le programme d'usinage envoyé à la CN est déjà optimisé et ne nécessite aucune fonctionnalité de traitement supplémentaire.

L'engagement dans les zones à forte variation de trajectoire se fait de manière coordonnée entre plusieurs axes de la machine. La combinaison des mouvements linéaires et rotatifs des axes dans des zones de la pièce où l'usinage pourrait se faire par interpolation des axes linéaires uniquement permet d'améliorer le comportement global en bout d'outil.

Contrairement à l'art antérieur, l'optimisation selon l'invention ne porte que sur les axes rotatifs et vise à améliorer les changements d'orientation entre la pièce et l'outil avec une trajectoire en bout d'outil (coordonnées XYZ) qui n'est pas modifiée.

Selon l'invention, l'anticipation des mouvements de rotation est appliquée sur une large portion de la trajectoire incriminée au contraire des solutions de l'art antérieur qui s'appliquent de manière très localisée autour des discontinuités géométriques. Il en résulte une interpolation simplifiée avec une même courbe polynomiale pour une multitude de points intégrant une grande quantité de blocs précédant la zone critique contrairement aux méthodes de l'art antérieur nécessitant une interpolation différente entre chaque bloc consécutif de manière à rester dans la bande de tolérance d'erreur de positionnement.

La méthode selon l'invention permet de générer un programme d'usinage définissant une trajectoire d'outil avec une vitesse en bout d'outil constante.

## Revendications

1. Méthode de génération d'un programme d'usinage définissant une trajectoire d'un outil (1) pour une pièce (2) présentant une première portion pouvant être usinée avec uniquement des axes linéaires suivie d'une seconde portion nécessitant un usinage avec des axes linéaires et un ou deux axes rotatifs, ladite méthode incluant :

   - la génération d'un code de base définissant la trajectoire de l'outil (1) avec, pour la première portion, un premier parcours où un mouvement relatif entre l'outil (1) et la pièce (2) s'effectue uniquement selon des axes linéaires suivi, pour la seconde portion, d'un second parcours où le mouvement relatif s'effectue selon des axes linéaires et le ou les deux axes rotatifs, **caractérisée en ce qu'**elle inclut en outre avant l'exécution dudit programme d'usinage sur une commande numérique :

- l'optimisation du code de base pour modifier la trajectoire préalablement définie, à l'aide des étapes suivantes :

- modification du premier parcours avec le mouvement relatif s'effectuant selon les axes linéaires et le ou les deux axes rotatifs avant d'aborder le second parcours, la modification du premier parcours s'effectuant en modifiant l'alignement et la répartition de vecteurs d'orientation (8) de l'outil (1) sur ledit premier parcours ;
- reconstruction par interpolation polynomiale du profil d'une grandeur cinématique dudit ou d'un desdits deux axes rotatifs sur le premier parcours afin de supprimer les discontinuités sur le profil.

2. Méthode selon la revendication 1, dans laquelle en présence de deux axes rotatifs, la méthode comprend, après l'étape de reconstruction du profil d'un desdits deux axes rotatifs, une étape de synchronisation entre les deux axes rotatifs sur base de la relation cinématique qui lie les deux axes.

3. Méthode selon l'une quelconque des revendications précédentes, dans laquelle en présence de deux axes rotatifs, l'axe rotatif choisi pour l'étape de reconstruction du profil de la grandeur cinématique est celui engendrant des mouvements suiveurs les plus importants.

4. Méthode selon l'une quelconque des revendications 2 à 3, dans laquelle en présence de deux axes rotatifs, la relation cinématique qui lie les deux axes rotatifs sur le premier parcours modifié est déterminée par interpolation numérique ou analytiquement.

5. Méthode selon l'une quelconque des revendications précédentes, dans laquelle la grandeur cinématique est la vitesse.

6. Méthode selon la revendication 5, dans laquelle après l'étape de reconstruction du profil de vitesse dudit ou d'un desdits deux axes rotatifs sur le premier parcours, son profil de position est recomposé par intégration du profil de vitesse reconstruit.

7. Méthode selon la revendication 6, dans laquelle en présence de deux axes rotatifs, le profil de position de l'autre desdits deux axes rotatifs est calculé sur base de la relation cinématique liant les positions des deux axes rotatifs.

8. Méthode selon l'une quelconque des revendications précédentes, dans laquelle l'optimisation du code de base pour modifier la trajectoire préalablement définie ne modifie pas la trajectoire en bout d'outil (1).

9. Méthode selon l'une quelconque des revendications précédentes, comprenant une étape d'adaptation de la géométrie de base de la pièce (2) à usiner avant l'étape d'optimisation du code de base.

10. Méthode selon la revendication 9, dans laquelle l'étape d'adaptation consiste à prolonger les surfaces à usiner de ladite pièce (2), une courbe fictive (6) servant d'appui à l'outil (1) étant créée dans la partie prolongée de la pièce (2).

11. Programme d'usinage issu de la méthode de génération selon l'une quelconque des revendications 1 à 10, le programme d'usinage étant destiné, après optimisation, à être exécuté sur une commande numérique, ledit programme d'usinage étant adapté pour une pièce (2) présentant une première portion pouvant être usinée avec uniquement des axes linéaires suivie d'une seconde portion nécessitant un usinage avec des axes linéaires et un ou deux axes rotatifs, **caractérisé en ce que** ledit programme d'usinage est optimisé pour définir une trajectoire d'outil (1) comportant pour la première portion et pour la seconde portion un parcours avec un usinage selon les axes linéaires et le ou les deux axes rotatifs, le profil d'une grandeur cinématique dudit ou d'un desdits deux axes rotatifs étant continu entre la première portion et la seconde portion.

12. Moyen d'enregistrement des données lisibles par un ordinateur comprenant le programme d'usinage selon la revendication 11.

**Patentansprüche**

1. Verfahren zur Erzeugung eines Bearbeitungsprogramms, das eine Bahn eines Werkzeugs (1) für eine Werkstück (2) definiert, aufweisend einen ersten Abschnitt, der nur mit linearen Achsen bearbeitet werden kann, gefolgt von einem zweiten Abschnitt, der eine Bearbeitung mit linearen Achsen und einer oder zwei Drehachsen erfordert, wobei das Verfahren Folgendes beinhaltet:

- das Erzeugen eines Basiscodes, der die Bahn des Werkzeugs (1) definiert, mit, für den ersten Abschnitt, einer ersten Strecke, wobei eine relative Bewegung zwischen dem Werkzeug (1) und dem Werkstück (2) nur gemäß linearen Achsen erfolgt, gefolgt, für den zweiten Abschnitt, von einer zweiten Strecke, wobei die relative Bewegung gemäß linearen Achsen und der oder den zwei Drehachsen erfolgt, **dadurch gekennzeichnet, dass** es außerdem vor der Ausführung des Bearbeitungsprogramms durch eine digitale Steuerung Folgendes umfasst:
- Optimierung des Basiscodes, um die zuvor definierte Bahn mit Hilfe der folgenden Schritte zu modifizieren:
- Modifizieren der ersten Strecke mit der relativen Bewegung, die gemäß den linearen Achsen und der oder den zwei Drehachsen erfolgt, bevor die zweite Strecke in Angriff genommen wird, wobei das Modifizieren der ersten Strecke durch das Modifizieren der Ausfluchtung und der Verteilung von Orientierungsvektoren (8) des Werkzeugs (1) auf der besagten ersten Strecke erfolgt;
- Rekonstruieren, durch Polynominterpolation, des Profils einer kinematischen Größe der oder einer der zwei besagten Drehachsen auf der ersten Strecke, um die Diskontinuitäten auf dem Profil zu beseitigen.

2. Verfahren nach Anspruch 1, wobei in Anwesenheit von zwei Drehachsen das Verfahren, nach dem Schritt des Rekonstruierens des Profils einer der besagten zwei Drehachsen, einen Schritt des Synchronisierens zwischen den zwei Drehachsen auf der Grundlage der kinematischen Beziehung, die die zwei Achsen verbindet, umfasst.

3. Verfahren nach irgendeinem der vorhergehenden Ansprüche, wobei in Anwesenheit von zwei Drehachsen die Drehachse, ausgewählt für den Schritt des Rekonstruierens des Profils der kinematischen Größe, diejenige ist, die die bedeutendsten Folgebewegungen erzeugt.

4. Verfahren nach irgendeinem der Ansprüche 2 bis 3, wobei in Anwesenheit von zwei Drehachsen die kinematische Beziehung, die die zwei Drehachsen auf der ersten modifizierten Strecke verbindet, durch digitale Interpolation oder analytisch bestimmt wird.

5. Verfahren nach irgendeinem der vorhergehenden Ansprüche, wobei die kinematische Größe die Geschwindigkeit ist.

6. Verfahren nach Anspruch 5, wobei nach dem Schritt des Rekonstruierens des Geschwindigkeitsprofils der oder einer der zwei besagten Drehachsen auf der ersten Strecke ihr Positionsprofil durch Integration des rekonstruierten Geschwindigkeitsprofils neu zusammengesetzt wird.

7. Verfahren nach Anspruch 6, wobei in Anwesenheit von zwei Drehachsen das Positionsprofil der anderen der besagten zwei Drehachsen auf der Grundlage der kinematischen Beziehung berechnet wird, die die Positionen der zwei Drehachsen verbindet.

8. Verfahren nach irgendeinem der vorhergehenden Ansprüche, wobei das Optimieren des Basiscodes, um die zuvor definierte Bahn zu modifizieren, die Bahn am Ende des Werkzeugs (1) nicht modifiziert.

9. Verfahren nach irgendeinem der vorhergehenden Ansprüche, umfassend einen Schritt des Anpassens der Grundgeometrie des Werkstücks (2), das bearbeitet werden soll, vor dem Schritt des Optimierens des Basiscodes.

10. Verfahren nach Anspruch 9, wobei der Schritt des Anpassens darin besteht, die Oberflächen, die bearbeitet werden sollen, des besagten Werkstücks (2) zu verlängern, wobei eine fiktive Krümmung (6) dem Werkzeug (1) als Auflage dient, die im verlängerten Teil des Werkstücks (2) erzeugt wurde.

11. Bearbeitungsprogramm, das aus dem Verfahren zur Erzeugung nach irgendeinem der Ansprüche 1 bis 10 stammt, wobei das Bearbeitungsprogramm ausgelegt ist, um, nach dem Optimieren, durch eine digitale Steuerung durchgeführt zu werden, wobei das besagte Bearbeitungsprogramm für ein Werkstück (2) angepasst ist, das einen ersten Abschnitt aufweist, der nur mit linearen Achsen bearbeitet werden kann, gefolgt von einem zweiten Abschnitt, der eine Bearbeitung mit linearen Achsen und einer oder zwei Drehachsen erfordert, **dadurch gekennzeichnet, dass** das besagte Bearbeitungsprogramm optimiert ist, um eine Werkzeugbahn (1) zu definieren, die für den ersten Abschnitt und für den zweiten Abschnitt eine Strecke mit einer Bearbeitung gemäß den linearen Achsen und der oder den zwei Drehachsen umfasst, wobei das Profil einer kinematischen Größe der oder einer der zwei besagte Drehachsen zwischen dem ersten Abschnitt und dem zweiten Abschnitt kontinuierlich ist.

12. Mittel zum Registrieren der lesbaren Daten, durch einen Computer, umfassend das Bearbeitungsprogramm nach Anspruch 11.

## Claims

1. Method for generating a machining program defining a trajectory of a tool (1) for a part (2) having a first portion able to be machined with only linear axes followed by a second portion requiring machining with linear axes and one or two rotary axes, said method including:

- generating a base code defining the trajectory of the tool (1) with, for the first portion, a first journey where a relative movement between the tool (1) and the part (2) is done only along linear axes followed, for the second portion, by a second journey where the relative movement is done along linear axes and the rotary axis or the two rotary axes, **characterized in that** it further includes, before the execution of said machining program on a digital command:

- optimizing the base code in order to modify the trajectory previously defined, using the following steps:

> - modifying the first journey with the relative movement taking place along the linear axes and the one or two rotary axes before beginning the second journey, the modification of the first journey taking place by modifying the alignment and the distribution of orientation vectors (8) of the tool (1) on said first journey;
> - reconstruction by polynomial interpolation of the profile of a kinematic property of said or of one of said two rotary axes on the first journey in order to eliminate the discontinuities on the profile.

2. Method according to claim 1, wherein in the presence of two rotary axes, the method comprises, after the step for reconstructing the profile of one of said two rotary axes, a step for synchronization between the two rotary axes based on the kinematic relationship that connects the two axes.

3. Method according to any one of the preceding claims, wherein in the presence of two rotary axes, the rotary axis chosen for the step of reconstructing the profile of the kinematic property is that creating the greatest follower movements.

4. Method according to any one of claims 2 or 3, wherein in the presence of two rotary axes, the kinematic relationship that connects the two rotary axes on the modified first journey is determined by digital interpolation or analytically.

5. Method according to any one of the preceding claims, wherein the kinematic property is the speed.

6. Method according to claim 5, wherein after the step of reconstructing the speed profile of said axis or one of said two rotary axes on the first journey, its position profile is recomposed by integration of the reconstructed speed profile.

7. Method according to claim 6, wherein in the presence of two rotary axes, the position profile of the other of said two rotary axes is calculated based on the kinematic relationship connecting the positions of the two rotary axes.

8. Method according to any one of the preceding claims, wherein the optimization of the base code for modifying the previously defined journey does not modify the journey at the end of the tool (1).

9. Method according to any one of the preceding claims, comprising a step for adapting the base geometry of the part (2) to be machined before the step for optimizing the base code.

10. Method according to claim 9, wherein the adaptation step consists in extending the surfaces to be machined of said part (2), a fictitious curve (6) serving as support for the tool (1) being created in the extended section of the part (2).

11. Machining program derived from the generating method according to any one of claims 1 to 10, the machining program being intended, after optimization, to be executed on a digital command, said machining program being adapted for a part (2) having a first portion able to be machined with only linear axes followed by a second portion requiring machining with linear axes and one or two rotary axes, **characterized in that** said machining program is optimized in order to define a tool trajectory (1) comprising, for the first portion and for the second portion, a journey with machining along the linear axes and the one or two rotary axes, the profile of a kinematic property of said rotary axis or one of said two rotary axes being continuous between the first portion and the second portion.

12. Means for recording computer-readable data comprising the machining program according to claim 11.

Axe B

Axe C

Z
X

Y
Z

1

2

FIG.1

Δx

Δz

1

2

a)

Δx

Δz

1

Δx'

Δz'

z'

x'

z'

x'

Δz'

Δx'

2

b)

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

**EP 3 440 521 B1**